# EUROPEAN PATENT APPLICATION

(11) **EP 1 536 425 A2**
(43) Date of publication of application: **01.06.2005**
(21) Application number: 04027173.6
(22) Date of filing: 16.11.2004
(51) Int. Cl.: G11B 23/40, G11B 23/28

(54) **Optical information recording medium and information recording method**

(30) Priority: 18.11.2003 JP 2003387513
(71) Applicant: FUJI PHOTO FILM CO., LTD., Kanagawa-ken (JP)
(72) Inventor: Usami, Yoshihisa, Fuji Photo Film Co., Ltd., Odawara-shi Kanagawa (JP)
(74) Representative: HOFFMANN - EITLE

(57) **Abstract**

An optical information recording medium, including: a substrate; a code information recording layer provided on the substrate for recording code information; a visible information recording layer provided on the side of the substrate opposite the code information recording layer for recording visible information; and at least one selected from a character and a mark, which is provided on the side on which the visible information recording layer is provided and allows the determination of whether or not recording to the visible information recording layer is permitted.

## Description

### BACKGROUND OF THE INVENTION

### Field of the Invention

The present invention relates to an optical information recording medium, particularly an optical information recording medium capable of having visible information recorded on a surface opposite to its recording surface, and a method of recording information on the optical information recording medium.

### Description of the Related Art

In recent years, information-recordable/reproducible optical discs (optical information recording media) have been commercially available, such as CD-Rs (Compact Disc-Recordable) and CD-RWs (Compact Disc-Rewritable). Various types of information such as music data can be recorded on these optical discs with an optical disc drive such as a CD-R drive or a CD-RW drive. In these optical disc drives, a laser beam corresponding to information to be recorded is applied from an optical pickup to the recording surface formed on one side of the optical disc, when the information is recorded. When recorded information is read out from an optical disc such as a CD-ROM (Compact Disc-Read Only Memory), a laser beam is also applied from the optical pickup of the optical disc drive, so that the information can be read out from the reflected beam.

In recent years, there has been a demand for optical discs having a higher recording density. An optical disc that satisfies such a demand and has already been put on the market is a recordable-type digital versatile disc (so called DVD-R).

Recently, networks such as the Internet and High-Vision TV have rapidly come into wide use. In view of HDTV (High Definition Television) broadcasting, there has been an increasing demand for large-capacity recording media for recording image information conveniently and inexpensively.

DVD-Rs are widely in use as a large-capacity recording medium, but their capacity may not be sufficient to meet future demands. Thus, further development has been carried out in pursuit of optical discs having a larger recording capacity and whose recording density is increased by the use of a laser having a wavelength shorter than that for DVD-Rs.

Optical discs having a label thereon which is placed on a surface opposite to a recording surface for recording music data or the like are known. Such a label may have printed visible information such as song titles of the music data recorded on the recording surface or a title for identifying the recorded data. Such optical discs are manufactured by a process of printing a title or the like on a circular label sheet with a printer or the like in advance and sticking the label sheet on the surface opposite to the recording surface of the optical disc.

However, such a method for manufacturing an optical disc having the desired visible information (such as a title) on the surface of a label as described above requires a printer in addition to an optical disc drive. Such a method therefore involves a complicated process of performing recording to the recording surface of an optical disc in an optical disc drive, then taking out the optical disc from the optical disc drive, and sticking a label sheet, on which printing has been performed with a separately provided printer, on the optical disc.

In view of such circumstances, a method has been proposed including the steps of providing an optical disc having a heat sensitive layer on the side opposite the recording surface and irradiating a laser beam from an optical disc drive to the heat sensitive layer to modify the heat sensitive layer and carry out recording through changes in optical density in the visible range, whereby visible information such as characters indicating song titles for music data is formed (for example, see Japanese Patent Application Laid-Open (JP-A) No. 2002-203321). Herein, the term "change" means a change that produces visible contrast, such as a change in color, a change in reflectivity due to diffraction, scattering, etc., or a change in reflectivity due to a change in refractive index. Using such a method enables the desired image to be printed on the label surface of the optical disc by an optical disc drive without a separately prepared printer or the like.

A system in which protection is provided and recording of visible information is allowed only on a specific optical disc in the process of recording a visible image on the surface opposite the recording surface has not been known. Specifically, there has been no disclosure about a technique for allowing visible information to be recorded only on a specific user's (licensee's) optical disc, a specific manufacturer's optical disc or the like.

### SUMMARY OF THE INVENTION

The present invention has been made in view of the above-described circumstances and provides an optical information recording medium comprising a substrate, a code information recording layer provided on the substrate and a visible information recording layer provided on the other side of the substrate, wherein recording to the visible information recording layer is allowed only under certain conditions. The present invention further provides a method of recording visible information on such an optical information recording medium.

A first aspect of the invention is to provide an optical information recording medium. The optical information recording medium comprises: a substrate; a code information recording layer provided on the substrate for recording code information; a visible information recording layer provided on the side of the substrate opposite the code information recording layer for recording visible information; and at least one selected from a character and a mark, which is provided on the side on which the visible information recording layer is provided. The at least one selected from a character and a mark allows the determination of whether or not recording to the visible information recording layer is permitted.

A second aspect of the invention is to provide a method of recording visible information to an optical information recording medium comprising a substrate, a code information recording layer provided on the substrate for recording code information, a visible information recording layer provided on the side of the substrate opposite the code information recording layer for recording visible information, and at least one selected from a character and a mark, which is provided on the side on which the visible information recording layer is provided and allows the determination of whether or not recording to the visible information recording layer is permitted. The method comprises: reading the at least one selected from a character and a mark; and recording visible information to the visible information recording layer of the optical information recording medium only when it is determined, based on the at least one selected from a character and a mark, that recording to the visible information recording layer is permitted.

According to the invention, there are provided an optical information recording medium comprising a substrate, a code information recording layer provided on one side of the substrate and a visible information recording layer provided on the other side of the substrate, wherein recording to the visible information recording layer is allowed only under certain conditions, and a method of recording information on optical information recording medium.

### DETAILED DESCRIPTION OF THE INVENTION

The optical information recording medium comprises: a substrate; a code information recording layer provided on the substrate for recording code information; a visible information recording layer provided on the side of the substrate opposite the code information recording layer for recording visible information; and at least one selected from a character and a mark, which is provided on the side of the substrate on which the visible information recording layer is provided. The at least one selected from a character and a mark allows the determination of whether or not recording to the visible information recording layer is permitted.

In an embodiment of the present invention, a visible information recording layer has a recording density lower than that of the code information recording layer.

In another embodiment of the invention, a visible information recording layer is different from the code information recording layer in structure and/or material. Herein, the term "structure" refers to a physical feature such as layer structure, shape and format.

The information recording method of the invention is a method of recording visible information to an optical information recording medium comprising a substrate, a code information recording layer provided on the substrate for recording code information, a visible information recording layer provided on the side of the substrate opposite the code information recording layer for recording visible information, and at least one selected from a character and a mark, which is provided on the side on which the visible information recording layer is provided and allows the determination of whether or not recording to the visible information recording layer is permitted. The method comprises: reading the at least one selected from a character and a mark; and recording visible information to the visible information recording layer of the optical information recording medium only when it is determined, based on the at least one selected from a character and a mark, that recording to the visible information recording layer is permitted.

The optical information recording medium and the information recording method according to the invention will be described in detail below.

The type of the optical information recording medium of the invention may be any of a read-only type, a recordable type and a rewritable type but preferably a recordable type. The recording may be performed by any method such as a phase change method, a magneto optic method, and a dye type method but is preferably performed by a dye type method.

Examples of the layered structure of the optical information recording medium of the invention include the following structures:
(1) a first layered structure comprising a code information recording layer, a reflective layer and an adhesive layer formed on a substrate in this order, and a dummy substrate and a visible information recording layer formed on the adhesive layer;
(2) a second layered structure comprising a code information recording layer, a reflective layer, a protective layer, and an adhesive layer formed on a substrate in this order, and a dummy substrate and a visible information recording layer formed on the adhesive layer;
(3) a third layered structure comprising a code information recording layer, a reflective layer, a protective layer, an adhesive layer, and a protective layer formed on a substrate in this order, and a dummy substrate and a visible information recording layer formed on the protective layer;
(4) a fourth layered structure comprising a code information recording layer, a reflective layer, a protective layer, an adhesive layer, a protective layer, and a reflective layer formed on a substrate in this order, and a dummy substrate and a visible information recording layer formed on the reflective layer; and
(5) a fifth layered structure comprising a code information recording layer, a reflective layer, an adhesive layer, and a reflective layer formed on a substrate in this order, and a dummy substrate and a visible information recording layer formed on the reflective layer.

It should be noted that the first to fifth structures are only examples and these structures should not be construed to limit the present invention. The order of the layers may be changed, and part of the layers may be exchanged. Part of the layers may also be omitted. Each layer may have a monolayer structure or a multilayer structure.

The substrate and the respective layers are described below.

### [Visible Information Recording Layer]

The optical information recording medium of the invention has the visible information recording layer on the side of the substrate opposite to the code information recording layer.

Visible information (a visible image(s)) that the user desires to put on the visible information recording layer such as characters or letters, graphics and picture patterns is recorded on the visible information recording layer. Examples of such a visible image include disc title, contents information, contents thumbnail, related picture patterns, pictorial design or pattern, copyright information, recording date and time, recording method, and recording format.

The visible information recording layer visibly records information such as characters or letters, images and picture patterns. The visible information may be displayed either by developing color or extinguishing color.

Such a visible information recording layer may be any type layer such as a magneto optic recording layer, a phase change recording layer, a dye recording layer, a recordable type recording layer, a heat sensitive layer, and a photosensitive recording layer, but is preferably a dye recording layer or a heat sensitive layer. The visible information recording layer is different from the code information recording layer, which will be described below, in recording density or structure and/or material.

A single optical disc drive (recording apparatus) can be used for both recording on the visible information recording layer and recording on the code information recording layer, which will be described below, in the use of the optical information recording medium of the invention. Specifically, recording may be performed on one of the visible information recording layer and the code information recording layer, and then the medium may be turned upside down, and recording may be performed on the layer of the other side. Thus, an optical disc drive having the function of recording visible images on the visible information recording layer may be used. Examples of such an optical disc drive are disclosed in JP-A Nos. 2003-203348 and 2003-242750.

In the use of the optical information recording medium of the invention, it is determined whether or not recording to the visible information recording layer is permitted according to a character or a mark. The character can be one character, or plural letters of characters (character string). Whether or not recording to the visible information recording layer is permitted can be encoded in the character or the mark in advance. The recording to the visible information recording layer is performed only when the character or the mark is recognized and identified as allowing the recording. Alternatively, the information may not directly indicate whether or not recording is permitted. In this case, whether or not recording to the visible information recording layer is permitted may be determined based on any piece of information described on the disc. Examples of such information include: authorized user-indicating information, information indicating a valid period of use, information indicating a number of times that the medium can be used, rental information, resolution-indicating information, layer-indicating information, user information, copyright owner information, copyright number information, manufacturer information, production date information, sales date information, store or retailer information, information indicating set number for use, region information, language-indicating information, information indicating applications, product user information, and use number information.

The character may comprise any characters or letters such as a number, an alphabet and a Japanese katakana phonetic script.

In the case of the number, the lower limit to the number of digits is preferably at least one, more preferably at least four, still more preferably at least eight, and the upper limit to the number of digits is preferably at most 10000, more preferably at most 1000, still more preferably at most 256, particularly preferably at most 64. The above range of the number of digits is preferred in terms of reduction in the occurrence of misidentifications, reduction of unnecessary increase in time or area for drawing, and reduction of increase in reading time.

The character may indicate not only identification number such as license identification number but also any other information such as a disc version, an optimal recording method such as recording power, pulse train shape and strategy, a manufacturer's name, a production number, and a manufacturing plant.

Any mark readable with a laser for recording may be used. Examples of such a mark include a bar code, a visible mark and a two-dimensional mark, but a bar code is particularly preferred.

The character or the mark is preferably positioned, for example, in an area corresponding to a burst cutting area or positioned at a place that is not used for information recording, such as the innermost radius and the outermost radius.

The position of the area corresponding to the burst cutting area may vary according to the type of the medium, but for example, the area may be positioned 22 mm to 24 mm from the center of the optical information recording medium.

The character or the mark may be formed by using a recording means that applies heat or light to the medium while controlling the position of the heat or the light. For example, the recording means may be a laser head, a thermal head, an optical lamp, or a heater. In particular, the laser head is preferred. The laser beam output from the laser head may be in any wavelength range including visible, infrared and ultraviolet ranges, but the visible range is preferred.

The optical information recording medium may be structured so that the character or the mark on the side of the substrate on which visible information recording layer is provided is read from the side of the code information recording layer. Specifically, the substrate and each layer of the optical information recording medium may be made transparent so that the character or the mark on the visible information recording layer side can be identified from the code information (optical information) recording layer side. In case the optical information recording medium includes a reflective layer, the character or the mark may preferably be provided so as not to be blocked by the reflective layer.

The thickness of the visible information recording layer is preferably from 0.1 to 200 µm, more preferably from 0.5 to 100 µm, and still more preferably from 1 to 50 µm.

In the use of the optical information recording medium of the invention, the character or the mark provided on the visible information recording layer side is read, for example, by a laser, and recording to the visible information recording layer is permitted only when the character or the mark allows the recording to the visible information recording layer. Therefore, improper recording, unauthorized recording and the like can be prevented.

### [Code Information Recording Layer]

The code information recording layer is a layer for recording code information (encoded information) such as digital information. The code information recording layer may be of any type such as a dye type, a recordable type, a phase change type, and a magneto optic type, but is preferably of a dye type.

Examples of the dye used for the dye type code information recording layer include a cyanine dye, an oxonol dye, a metal complex dye, an azo dye, and a phthalocyanine dye.

The dyes disclosed in JP-A Nos. 04-74690, 08-127174, 11-53758, 11-334204, 11-334205, 11-334206, 11-334207, 2000-43423, 2000-108513, and 2000-158818 may also preferably be used.

The applicable recording material is not limited to dyes. Other examples of applicable recording material include, but are not limited to, organic compounds such as triazole compounds, triazine compounds, cyanine compounds, merocyanine compounds, aminobutadiene compounds, phthalocyanine compounds, cinnamic acid compounds, viologen compounds, azo compounds, oxonol benzoxazole compounds, and benzotriazole compounds. Particularly preferable recording materials are cyanine compounds, aminobutadiene compounds, benzotriazole compounds, and phthalocyanine compounds.

The code information recording layer may be formed by a process of: dissolving a recording material such as a dye in an appropriate solvent together with a binder and the like to prepare a coating liquid; applying the coating liquid to a substrate to form a coating film; and then drying the coating film. The content of the recording material in the coating liquid is preferably from 0.01 to 15% by mass, more preferably from 0.1 to 10% by mass, still more preferably from 0.5 to 5% by mass, and still even more preferably from 0.5 to 3% by mass.

The code information recording layer may be formed by a method such as vapor deposition, sputtering, CVD, or solution coating. Solution coating is preferred, which may include the steps of dissolving the dye and optionally a quencher, a binder and the like in a solvent to prepare a coating liquid, applying the coating liquid to a substrate to form a coating film, and drying the coating film.

Examples of the solvent used for the coating liquid include esters such as butyl acetate, ethyl lactate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcyclohexane; ethers such as dibutyl ether, diethyl ether, tetrahydrofuran, and dioxane; alcohols such as ethanol, n-propanol, isopropanol, n-butanol, and diacetone alcohol; fluoro-solvents such as 2,2,3,3-tetrafluoropropanol; and glycol ethers such as ethylene glycol monomethyl ether, ethylene glycol monoethyl ether and propylene glycol monomethyl ether.

These solvents may be used alone or in combination of two or more thereof depending on the solubility of the dye for use. Any additive such as an antioxidant, an UV absorber, a plasticizer, and a lubricant may be added to the coating liquid, depending on the purpose.

Examples of the binder to be used include a natural organic polymer material such as gelatin, a cellulose derivative, dextran, rosin, and rubber; and a synthetic organic polymer such as a hydrocarbon resin such as polyethylene, polypropylene, polystyrene, and polyisobutylene; a vinyl resin such as polyvinyl chloride, polyvinylidene chloride, and a polyvinyl chloride-polyvinyl acetate copolymer; an acrylic resin such as poly(methyl acrylate) and poly(methyl methacrylate); polyvinyl alcohol; chlorinated polyethylene; an epoxy resin; a butyral resin; a rubber derivative; and an initial condensate of a thermosetting resin such as a phenol-formaldehyde resin.

If the binder is used in combination as a material for the code information recording layer, the amount of the binder may be preferably from 0.01 to 50 times, and more preferably from 0.1 to 5 times as much as the amount of the dye by mass ratio.

Examples of the solution coating method include a spray method, a spin coating method, a dipping method, a roll coating method, a blade coating method, a doctor roll method, and a screen printing method. The code information recording layer may be a monolayer or a multilayer. The thickness of the code information recording layer is preferably from 10 to 500 nm, more preferably from 15 to 300 nm, and still more preferably 20 to 150 nm.

Any anti-color fading agent may be added to the code information recording layer in order to improve its light fastness. A singlet oxygen quencher is generally used as the anti-color fading agent. Any known singlet oxygen quencher as disclosed in publications such as patent specifications may be used. Specific examples thereof include those disclosed in JP-A Nos. 58-175693, 59-31194, 60-18387, 60-19586, 60-19587, 60-35054, 60-36190, 60-36191, 60-44554, 60-44555, 60-44389, 60-44390, 60-54892, 60-47069, 63-209995, and 04-25492; Japanese Patent Application Publication (JP-B) Nos. 01-38680 and 06-26028; German Patent No. 350,399; and Bulletin of the Chemical Society of Japan, October 1992, page 1141.

The anti-color fading agent such as the singlet oxygen quencher is used in an amount of preferably 0.1 to 50% by mass, more preferably 0.5 to 45% by mass, still more preferably 3 to 40% by mass, and particularly preferably 5 to 25% by mass, based on the mass of the dye.

Examples of the material for forming the phase change type code information recording layer include an Sb-Te alloy, a Ge-Sb-Te alloy, a Pd-Ge-Sb-Te alloy, a Nb-Ge-Sb-Te alloy, a Pd-Nb-Ge-Sb-Te alloy, a Pt-Ge-Sb-Te alloy, a Co-Ge-Sb-Te alloy, an In-Sb-Te alloy, a Ag-In-Sb-Te alloy, a Ag-V-In-Sb-Te alloy, and a Ag-Ge-In-Sb-Te alloy. In particular, the Ge-Sb-Te alloy and the Ag-In-Sb-Te alloy are preferred because they allow rewriting over times.

The thickness of the phase change type code information recording layer is preferably from 10 to 50 nm, and more preferably from 15 to 30 nm.

The phase change type code information recording layer may be formed by a vapor-phase thin film deposition method such as a sputtering method and a vacuum deposition method or the like.

### [Substrate]

The substrate of the optical information recording medium of the invention may be made of any material selected from a variety of materials that have been used for the substrate of the conventional optical information recording media.

Specific examples of such a material include glass, polycarbonate, an acrylic resin such as polymethylmethacrylate, a vinyl chloride resin such as polyvinyl chloride and a vinyl chloride copolymer, an epoxy resin, amorphous polyolefin, and polyester. If desired, any combination of these materials may be used.

Any of these materials may be used in the form of a film or a rigid substrate. Among the above materials, polycarbonate is preferred in terms of moisture resistance, dimensional stability, low cost, and the like.

The thickness of the substrate is preferably from 0.1 to 1.2 mm, and more preferably from 0.2 to 1.1 mm. For the purpose of achieving higher recording density, it is preferable to use a substrate formed with a groove at a track pitch narrower than that of the conventional CD-R or DVD-R. In such a case, the groove track pitch is preferably from 200 to 400 µm, and more preferably from 250 to 350 nm. The depth of the groove (groove depth) is preferably from 20 to 150 nm, and more preferably from 50 to 100 nm.

The width of the groove is preferably from 50 to 250 nm, and more preferably from 100 to 200 nm. The inclination of the groove is preferably from 20 to 80°, and more preferably from 30 to 70°.

For the purposes of improving flatness and adhesion strength and preventing deterioration of the recording layer, an undercoat layer may be provided on the side of the substrate on which the recording layer is to be formed (the side on which grooves are formed).

Examples of the material for the undercoat layer include polymer materials such as polymethylmethacrylate, an acrylic acid-methacrylic acid copolymer, a styrene-maleic anhydride copolymer, polyvinyl alcohol, N-methylolacrylamide, a styrene-vinyl toluene copolymer, chlorosulfonated polyethylene, nitrocellulose, polyvinyl chloride, chlorinated polyolefin, polyester, polyimide, a vinyl acetate-vinyl chloride copolymer, an ethylene-vinyl acetate copolymer, polyethylene, polypropylene, and polycarbonate; and a surface modifier such as a silane coupling agent. The undercoat layer may be formed by a process of dissolving or dispersing the above material in a suitable solvent to prepare a coating liquid and then applying the coating liquid to the surface of the substrate by a coating method such as spin coating, dip coating and extrusion coating.

The thickness of the undercoat layer is preferably from 0.005 to 20 µm, and more preferably from 0.01 to 10 µm.

### [Reflective Layer]

For the purpose of improving the reflectivity at the time of information reproduction, a reflective layer may be formed adjacent to the recording layer. The reflective layer should be made of a light-reflecting material having a high reflectivity to laser light. Examples thereof include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi; and stainless steels. These materials may be used alone, or two or more of these materials may be used in combination or in the form of an alloy. Preferred are Cr, Ni, Pt, Cu, Ag, Au, Al, and stainless steels. Particularly preferred is Au metal, Ag metal or Al metal or any alloy thereof. Most preferred is Ag metal, Al metal or any alloy thereof. The reflective layer may be formed by vapor-depositing, sputtering or ion-plating the light-reflecting material on the substrate or the recording layer. The thickness of the reflective layer is preferably from 10 to 300 nm, and more preferably from 50 to 200 nm.

### [Adhesive Layer]

The adhesive layer is an optional layer which may be formed for the purpose of improving the adhesion between the reflective layer and the dummy substrate.

The material for the adhesive layer is preferably a photo-curable resin, particularly preferably a low-shrinkage photo-curable resin in view of prevention of disc warping. Examples of such a photo-curable resin include UV-curable resins (UV-curable adhesives) such as SD-640 and SD-347 each manufactured by Dainippon Ink and Chemicals, Incorporated. The thickness of the adhesive layer is preferably from 1 to 1000 µm, more preferably from 5 to 500 µm, and particularly preferably from 10 to 100 µm, in view of elasticity.

### [Dummy Substrate]

The dummy substrate (protective substrate) may be the same as the substrate in material and shape.

A protective layer, which may be used in another structure, will be described in detail below.

### [Protective Layer]

The protective layer may be provided for the purpose of physically and chemically protecting the reflective layer, the recording layer or the like.

The protective layer is not essential if two substrates (one of which may be a dummy substrate) are bonded with the recording layer disposed inside as in the case of manufacturing DVD-R type optical information recording media.

Examples of the material for the protective layer include inorganic materials such as ZnS, ZnS-SiO₂, SiO, SiO₂, MgF₂, SnO₂, and Si₃N₄ and organic materials such as thermoplastic resins, thermosetting resins and UV-curable resins. For example, the protective layer may be formed by laminating an extruded-plastic film on the reflective layer via an adhesive. Alternatively, the protective layer may be formed by a method such as vapor deposition, sputtering and coating.

The thermoplastic resin or the thermosetting resin may be dissolved in a suitable solvent to prepare a coating liquid, which may then be applied and dried to form the protective layer. The UV-curable resin may be used as it is or dissolved in a suitable solvent to prepare a coating liquid, which may then be applied and cured with UV light to form the protective layer. Any of various additives such as an antistatic agent, an antioxidant and an UV absorber may also be added to the coating liquid, depending on the purpose. The thickness of the protective layer is preferably from 0.1 µm to 1 mm.

Still another structure may comprise a reflective layer, a recording layer and a cover layer formed on a substrate in this order. The cover layer is preferably formed on the recording layer via an adhesive layer. In this case, the structures other than the cover layer are as per described above.

### [Cover Layer]

The cover layer may be formed to protect the inside of the optical information recording medium from a shock or the like. The cover layer may be made of any transparent material but preferably of polycarbonate, cellulose triacetate or the like, and more preferably of a material having a moisture absorption rate of 5% or less at 23°C and 50%RH.

The term "transparent" means that the material transmits the recording light and the reproduction light (at a transmittance of 90% or more) .

The cover layer may be formed by a process of: dissolving a photo-curable resin for an adhesive layer in a suitable solvent to prepare a coating liquid; applying the coating liquid to the recording layer at a given temperature to form a coating film; laminating, on the coating film, a cellulose triacetate film (TAC film) produced by plastic extrusion; and irradiating light from above the laminated TAC film to cure the coating film. The TAC film preferably contains an ultraviolet absorber. The thickness of the cover layer may be from 0.01 to 0.2 mm, preferably from 0.03 to 0.1 mm, and more preferably from 0.05 to 0.095 mm.

A polycarbonate sheet or the like may also be used as the cover sheet.

For the purpose of controlling viscosity, the coating temperature is preferably from 23 to 50°C, more preferably from 24 to 40°C, and still more preferably from 25 to 37°C.

For the purpose of preventing disc warping, the irradiation of ultraviolet light to the coating film is preferably performed using a pulse type photoirradiation apparatus (preferably a UV-irradiation apparatus). The pulse interval is preferably several milliseconds or less, and more preferably several microseconds or less. The amount of light irradiation per pulse is not limited but preferably 3 kW/cm² or less, and more preferably 2 kW/cm² or less.

The light may be irradiated any number of times but preferably 20 times or less, and more preferably 10 times or less.

As described above, the optical information recording medium of the invention may be applied to so-called read-only type optical information recording media having recorded portions (pits) from which the recorded information is reproducible with a laser beam.

### [Information Recording Method]

The information recording method of the invention may comprise recording to the optical information recording medium of the invention by using a recording apparatus. The recording apparatus is at least capable of recording visible information to the visible information recording layer of the optical information recording medium. The recording apparatus is also capable of reading and identifying the character or the mark on the visible information recording layer. The recording apparatus to be used in the method of the invention is described below.

### [Recording apparatus]

The recording apparatus used in the method of the invention is at least capable of recording visible information to the visible information recording layer of the optical information recording medium and capable of reading and identifying the character or the mark on the visible information recording layer. The recording apparatus may also be capable of recording code information to the code information recording layer of the optical information recording medium.

The recording apparatus comprises at least a laser pickup that emits a laser beam and a rotation mechanism that rotates the optical information recording medium. The laser beam is irradiated from the laser pickup to the code information recording layer of the optical information recording medium being rotated when recording to or reproduction from the code information recording layer is performed. The configuration of such a recording apparatus is well known.

In the recording of visible information to the visible information recording layer, the recording apparatus may move both the optical information recording medium and the laser pickup relatively so that the laser pickup can move along the surface of the optical information recording medium. Visible information can be recorded by irradiating a laser beam and by modulating the laser beam according to the data for an image such as a character and a picture to be formed in synchronization with the movement of the optical information recording medium and the laser pickup. For example, such a configuration is disclosed in JP-A No. 2002-203321.

The recording apparatus of the invention also has a function of reading and recognizing the character or the mark on the optical information recording medium provided on a side on which visible information recording layer is formed. The recording apparatus further has a function of determining whether or not recording to the visible information recording layer is permitted based on the recognized character or the mark. The recording apparatus permits recording only when it identifies the character or the mark as allowing recording to the visible information recording layer, and otherwise does not permit recording. Whether the recording should be performed on the visible information recording layer or not can be determined in accordance with the conditions set according to the character or the mark. For example, when the character indicates authorized user-indicating information, the conditions can be set such that recording is permitted only when the authorized user-information meets licensed user's information.

The recording of the code information to the code information recording layer by the information recording method of the invention will be described below. In the case that the code information recording layer is of a dye type, the process of recording information may include the step of irradiating a laser beam from the laser pickup while rotating the above-described optical information recording medium with no recorded information at a predetermined linear recording speed. Accordingly, the dye of the code information recording layer absorbs the irradiated light; the temperature is thus locally raised; and the desired gaps (pits) are formed to change the optical properties of the layer.

The recording waveform of the laser beam may be a pulse train or single pulse when one pit is formed. The important thing is the ratio to the actual recording length (pit length).

The ratio of the laser beam pulse width to the actual recording length is preferably from 20 to 95%, more preferably from 30 to 90%, and still more preferably from 35 to 85%. In the case that the recording waveform is a pulse train, the above range should be applied with respect to the sum of the pulses.

The power of the laser beam may vary according to the linear recording speed, but is preferably from 1 to 100 mW, more preferably from 3 to 50 mW, and still more preferably from 5 to 20 mW, at a linear recording speed of 3.5 m/s. When the linear recording speed is doubled, the above-described preferred ranges of the laser beam power would be 2^{1/2} times, respectively.

The NA of the objective lens used for the pickup is preferably at least 0.62, and more preferably at least 0.65, for the purpose of increasing recording density.

In the invention, a semiconductor laser with an oscillation wavelength of from 300 to 700 nm may be used to form the recording light.

Alternatively, the code information recording layer can be of a phase change type. The phase change type code information recording layer can be made of the above-described material and can repeatedly change its phase between crystal and amorphous phases by the irradiation of a laser beam.

In the recording of information, a concentrated laser beam pulse is irradiated for a short time period to partially melt the phase change recording layer. The melted portion is immediately cooled by thermal diffusion and turned into solid to form an amorphous record mark. In the process of erasing the information, a laser beam is irradiated to the record mark portion to heat it to a temperature not higher than the melting point of the recording layer and not lower than the crystallization temperature, and then it is gradually cooled so that the amorphous record mark can be turned into a crystal, which corresponds to the original unrecorded state.

## Claims

1. An optical information recording medium comprising:
a substrate;
a code information recording layer provided on the substrate for recording code information;
a visible information recording layer provided on the side of the substrate opposite the code information recording layer for recording visible information; and
at least one selected from a character and a mark, which is provided on the side on which the visible information recording layer is provided and allows the determination of whether or not recording to the visible information recording layer is permitted.

2. The optical information recording medium of claim 1, wherein the visible information recording layer has a recording density lower than that of the code information recording layer.

3. The optical information recording medium of claim 1, wherein the visible information recording layer and the code information recording layer are different from each other in structure and/or material.

4. The optical information recording medium of claim 2 or 3, wherein the at least one selected from a character and a mark comprises a code indicating whether or not recording to the visible information recording layer is permitted.

5. The optical information recording medium of claim 2 or 3, wherein the at least one selected from a character and a mark comprises a license identification number.

6. The optical information recording medium of claim 2 or 3, wherein the at least one selected from a character and a mark comprises a bar code.

7. A method of recording visible information to an optical information recording medium comprising a substrate, a code information recording layer provided on the substrate for recording code information, a visible information recording layer provided on the side of the substrate opposite the code information recording layer for recording visible information, and at least one selected from a character and a mark, which is provided on the side on which the visible information recording layer is provided and allows the determination of whether or not recording to the visible information recording layer is permitted, the method comprising:
reading the at least one selected from a character and a mark; and
recording visible information to the visible information recording layer of the optical information recording medium only when it is determined, based on the at least one selected from a character and a mark, that recording to the visible information recording layer is permitted.

8. The method of claim 7, wherein the at least one selected from a character and a mark comprises a code indicating whether or not recording to the visible information recording layer is permitted.

9. The method of claim 7, wherein the at least one selected from a character and a mark comprises a bar code.

10. The method of claim 7, wherein:
visible information is recorded to the visible information recording layer by using a recording apparatus comprising a laser, the apparatus being able to record code information to the code information recording layer; and
the at least one selected from a character and a mark is read by using the recording apparatus.
